**Europäisches Patentamt**

(19) **European Patent Office** (11) Numéro de publication: **0 185 581**

**Office européen des brevets** **B1**

(12) **FASCICULE DE BREVET EUROPÉEN**

(45) Date de publication du fascicule du brevet: (51) Int. Cl.⁴: **F 16 C 1/28**
**08.03.89**

(21) Numéro de dépôt: **85402349.6**

(22) Date de dépôt: **29.11.85**

(54) Dipositif flexible tubulaire de transmission d'efforts longitudinaux.

(30) Priorité: **14.12.84 FR 8419126** (73) Titulaire: **Richoux, Raymond, ISPE, F-40600 Biscarrosse (FR)**

(43) Date de publication de la demande:
**25.06.86 Bulletin 86/26** (72) Inventeur: **Richoux, Raymond, ISPE, F-40600 Biscarrosse (FR)**

(45) Mention de la délivrance du brevet:
**08.03.89 Bulletin 89/10** (74) Mandataire: **Loriot, Jacques, c/o SA. FEDIT-LORIOT 38, avenue Hoche, F-75008 Paris (FR)**

(84) Etats contractants désignés:
**DE GB IT**

(56) Documents cité:
**EP-A-0 114 597**
**FR-A-871 065**
**FR-A-2 285 538**
**US-A-3 154 966**
**US-A-3 841 171**
**US-A-4 062 251**
**US-A-4 133 222**

LIBER, STOCKHOLM 1989

## Description

La présente invention concerne les dispositifs flexibles tubulaires destinés à assurer la transmission d'efforts de traction et/ou de compression du type constitué par une enveloppe ou gaine tubulaire flexible, métallique ou plastique, à section circulaire, dans l'axe de laquelle est disposée une lame centrale plate souple, généralement en acier inoxydable à haute résistance, destinée à transmettre les efforts dans son mouvement axial par rapport à ladite enveloppe fixe, entre deux rangées de billes, qui se déplacent guidées dans les chemins de roulement, creusés de part et d'autre dans ladite lame.

Les billes, roulant contre la lame, sont maintenues à écartement fixe par une cage à billes, généralement constituées par une bande méplate percée d'orifices de réception des billes.

Dans un mode de réalisation connu tel que celui décrit dans le brevet Français FR-A-1 124 613 au nom du même inventeur, les deux rangées de billes se déplacent, d'une part, dans les chemins de roulement creuses sur les deux faces de la lame centrale et, d'autre part, dans ceux de deux rails flexibles fixes opposés, appliqués contre la face interne circulaire de ladite enveloppe, également de forme aplatie et généralement faits en acier inoxydable.

Dans les transmissions connues de ce genre, les deux extrémités des deux rails sont accrochées à des embouts fixés au bâti de la machine sur laquelle est montée la transmission, tandis que les deux extrémités de la lame centrale sont respectivement solidaires de deux tiges coulissantes montées dans l'axe desdits embouts et attelées respectivement aux organes de commande ou à commander.

L'ensemble de la transmission, faite de profils plats peut prendre une configuration courbe ou sinueuse, grâce à la possibilité qu'ont les attaches des rails et de la lame centrale de s'orienter en tournant autour de l'axe des embouts d'extrémité, de façon à mettre le plan contenant les deux rangées de billes dans le plan de la courbe de la gaine flexible, comme cela a été décrit dans le brevet français FR-A-1 212 730 au nom du même inventeur.

Dans un autre mode de réalisation connu, tel que celui décrit dans le brevet français FR-A- 1 410 294 au nom du même inventeur, les deux rangées de billes, retenues par les cages, se déplacent, d'une part, dans les chemins de roulement creusés sur les deux faces de la lame centrale et, c'autre part, directement contre la face intérieure de l'enveloppe tubulaire flexible, celle-ci étant conçue de façon telle qu'elle présente, d'une part, une surface intérieure propre à servir de chemin de roulement convenable aux billes et, d'autre part, une résistance mécanique suffisante pour supporter les efforts divers, tels que les efforts de compression, de traction et de flexion, auxquels elles est susceptible d'être soumise.

Jusqu'à présent, donc, les transmissions à billes connues comportent soit deux rails de roulement des billes, soit aucun rail de roulement lorsque les billes roulent directement dans la gaine. Donc, jusqu'a présent, la structure des transmissions à billes connues a toujours été parfaitement symétrique par rapport à un plan médian passant par la lame centrale, cette structure symétrique ayant toujours parue logique et indispensable pour une transmission flexible.

Les deux solutions connues (avec deux rails ou aucun rail) présentent l'une et l'autre des avantages et des inconvénients au point de vue encombrement, prix de revient, efforts à transmettre, etc...

La présente invention a pour but de réunir, dans une nouvelle transmission à billes, plusieurs des avantages des deux solutions déjà connues, en évitant certains des inconvénients attachés à l'une ou l'autre de ces deux solutions.

Suivant l'invention, la première rangée de billes roule, d'une part, dans le chemin de roulement creusé dans la lame centrale et, d'autre part, dans un rail métallique méplat appliqué contre la face interne de l'enveloppe tubulaire, tandis que la deuxième rangée de billes roule, d'une part, dans le deuxième chemin de roulement creusé sur la face opposée de la lame centrale, et d'autre part, directement, sur la surface intérieure de l'enveloppe tubulaire.

Suivant l'invention, la transmission ne comporte donc qu'un seul rail de roulement des billes, c'est-à-dire qu'elle a une structure dissymétrique par rapport à un plan passant par le plan médian de la lame centrale, contrairement aux transmissions connues jusqu'à présent.

Suivant une autre caractéristique, l'organe d'attache du rail, ou manchon d'accrochage, susceptible de tourner à l'intérieur de l'embout, comme il a été indiqué dans ce qui précède, pour permettre la libre orientation de la gaine, est constitué, suivant l'invention, par un élément de tube ouvert dont les bords de l'ouverture longitudinale sont munis de dents pour recevoir et fixer le rail qui à lui-même des bords crantés pour recevoir les dents des bords du manchon d'accrochage,

Ce manchon d'accrochage, qui a le même diamètre intérieur que celui de la gaine flexible et laisse donc la même section libre, au-dessus et au-dessous de la lame centrale, si bien que les billes et leurs cages peuvent continuer leur course à travers ce manchon d'accrochage, ce qui n'était pas possible avec les systèmes d'accrochage de rail connus jusqu'à présent, par exemple d'après le brevet français précité FR-A-1 212 730.

Il résulte de cette disposition plusieurs avantages importants, avec la diminution du diamètre intérieur de la gaine par élimination d'un rail, tels que la suppression du risque de flambage du rail et de la lame, la réduction de la longueur de gaine démunie de billes en fin de course, la réduction de la longueur des embouts, la réduction de l'encombrement de la commande pour un effort déterminé à transmettre.

L'invention sera mieux comprise à la lecture de la description détaillée qui va suivre et à l'examen des dessins annexés qui représentent à titre d'exemple non limitatif un mode de réalisation de l'invention.

La figure 1 représente schématiquement l'ensemble d'un dispositif de transmission à billes suivant l'invention,

la figure 2 est une vue en coupe du dispositif, à plus grande échelle, suivant la ligne II-II de la figure 1.

La figure 3 est une vue en coupe longitudinale du dispositif montrant l'embout et le manchon rotatif d'accrochage du rail.

La figure 4 est une vue de côté du manchon d'accrochage.

La figure 5 est une vue en coupe transversale, à plus grande échelle, du même embout.

La figure 6 est une vue en plan de l'extrémité du rail de guidage montrant les crans d'accrochage dans le manchon.

Les figures 7 et 8 sont des vues en coupe du rail de guidage suivant respectivement les plans VII et VIII de la figure 6.

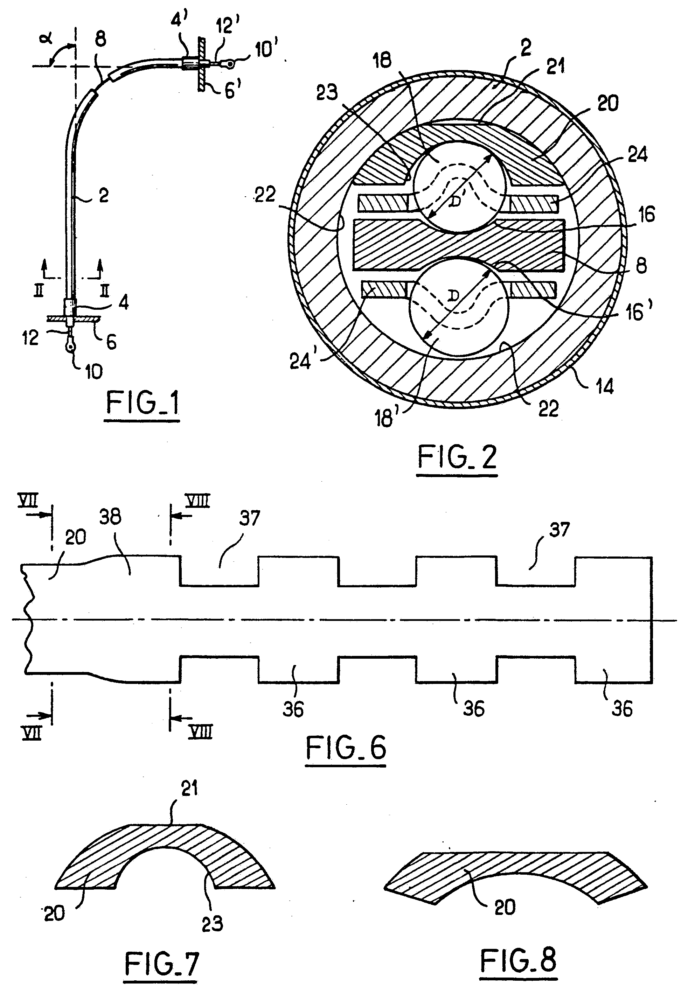

Le dispositif représenté sur la figure 1 comprend: une gaine tubulaire 2, deux embouts d'extrémité 4-4' enserrant la gaine et assurant sa fixation sur deux parties 6-6' du bâti de la machine, une lame centrale 8 guidée par deux jeux de billes (non représentés sur la figure 1), et deux organes d'actionnement 10-10' (moteur ou récepteur) fixés aux extrémités de la lame centrale 8 par deux tiges cylindriques 12-12' coulissant dans l'axe des embouts d'extrémité et pouvant pivoter dans ces embouts.

La gaine 2 peut être faite en matière plastique présentant les caractéristiques de dureté et d'élasticité décrites dans le brevet FR-A-1 410 294 précité, ou bien en fil métallique à section méplate enroulé en hélice, suivant des principes connus offrant une surface interne suffisamment lisse. Dans ce dernier cas, une enveloppe ou tube extérieur 14, en matière plastique, peut recouvrir la gaine 2.

L'âme centrale 8 est une lame plate souple, en acier inoxydable à haute résistance, creusée sur chacune de ses faces d'un chemin de roulement 16-16' pour les deux rangées de billes 18-18'.

Les billes 18 de la première rangée de billes roulent sur un rail flexible fixe 20 appliqué contre la face interne circulaire 22 de la gaine 2, ce rail, également en acier inoxydable, ayant une forme aplatie comme représenté sur les figures 2 et 7 (avec un méplat 21 dans la partie en arc de cercle s'appliquant contre la gaine) et présentant une gorge 23 de roulement des billes 18.

Entre les faces en regard de la lame centrale 8 et du rail 20, une cage à billes 24 maintient l'écartement des billes 18.

Les billes 18' de la deuxième rangée de billes 18' roulent directement sur la face interne 22 de la gaine 2, l'écartement des billes 18' étant maintenu par une deuxième cage à billes 24' logé entre la deuxième face de la lame centrale 8 et la surface interne de la gaine.

Les deux extrémités du rail unique 20 sont respectivement ancrées dans un manchon, calé axialement à l'intérieur des embouts 4-4', et pouvant tourner dans ces embouts de façon que l'ensemble de la transmission, faite de profils plats puisse prendre une configuration courbe ou sinueuse, grâce à la possibilité qu'ont les attaches du rail et de la lame centrale de s'orienter en tournant autour de l'axe des embouts d'extrémité, de façon à mettre le plan contenant les deux rangées de billes 18-18' dans le plan de la courbe de la gaine flexible.

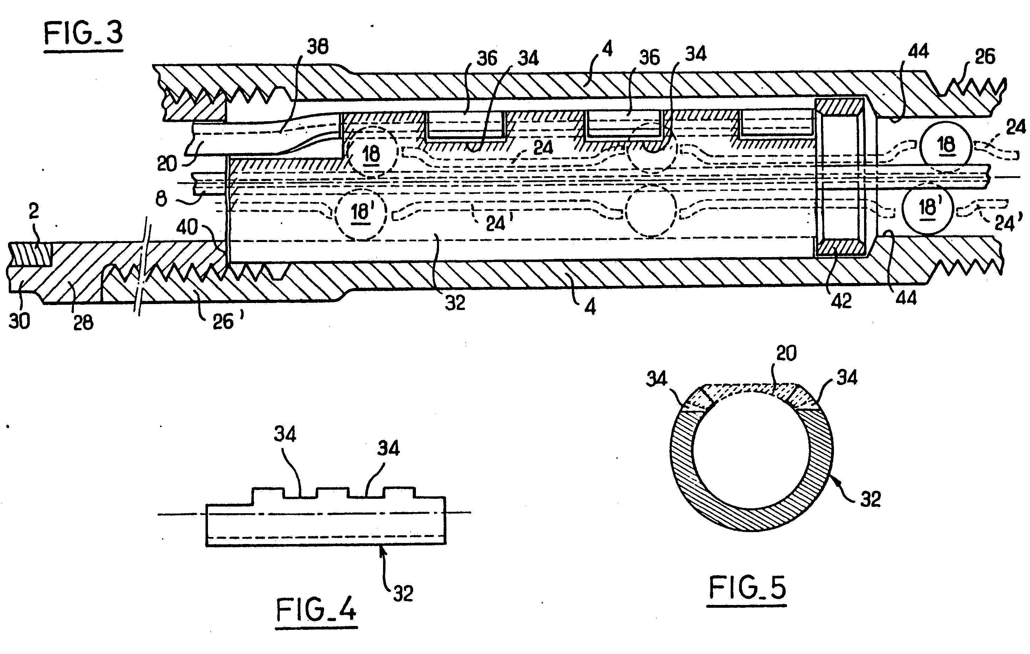

Ce manchon d'accrochage du rail 20 sera décrit en détail dans ce qui suit à propos des figures 4, 5 et 6.

Il ressort bien d'après ce qui précède que la transmission a une structure dissymétrique, par rapport au plan médian, la lame centrale étant sensiblement maintenue dans ce plan en utilisant un diamètre de billes D destinées au roulement sur le tube de gaine, légèrement plus grand que celui D' des billes situées entre le rail et la lame centrale.

Dans la transmission suivant l'invention, le diamètre intérieur de la gaine 2 se trouve réduit, par rapport aux transmissions connues à deux rails, du fait de l'absence du deuxième rail. Du même coup, le diamètre extérieur de la gaine est réduit.

En plus de la réduction des diamètres de la gaine, qui conduit, pour un même effort transmis, à une construction de la transmission plus légère, dans sa gaine et ses embouts d'extrémité, à un encombrement minimal et à une plus grande souplesse, la transmission à billes "monorail" possède encore un avantage important sur les transmissions classiques à deux rails dans lesquelles les longueurs respectives entre les points d'accrochage d'extrémité des rails varient avec l'angle alpha (voir figure 1) que font entre eux les embouts d'extrémité 4-4'.

Cet inconvénient oblige, en général, à laisser l'extrémité de l'un des rails accrochée avec un jeu longitudinal plus ou moins important, l'autre rail supportant seul les efforts longitudinaux, avec ce type de transmission à deux rails.

Le dispositif suivant l'invention permet donc de simplifier la construction par rapport aux transmissions classiques à deux rails, dans lesquelles l'un au moins des rails doit être ancré dans le manchon avec un certain jeu axial, autorisant des élongations différentes des deux rails par suite du changement final de direction des embouts, c'est-à-dire de l'angle alpha entre les embouts.

Avec le dispositif monorail suivant l'invention, le rail unique est ancré positivement, à chacune de ses deux extrémités, dans un manchon libre de tourner à l'intérieur de l'embout correspondant, comme exposé dans ce qui suit à propos des figures 3 à 6.

On a représenté sur la figure 3 un embout tubulaire 4 dont l'extrémité filetée 26 permet de fixer l'embout dans le bâti fixe 6 de la machine (figure 1) et dont l'autre extrémité filetée 26' reçoit un bouchon d'embout 28 comportant une jupe 30 qui enserre l'extrémité de la gaine flexible 2. On a représenté également la lame centrale 8, le rail unique 20, les deux jeux de billes 18-18' et les deux cages à billes 24-24'.

Le manchon rotatif d'accrochage du rail 20, à chacune des deux extrémités du flexible est constitué par un tube 32 fendu sur une certaine largeur 1 (figure 5) et muni de plusieurs crans 34, sur chacun des bords de la fente. Ces crans reçoivent, au montage des embouts, des dents d'accrochage 36 ménagées entre des encoches 37 en bordure du rail 20 dans le volume du cylindre-manchon.

Par un léger décrochement à partir de la zone 38 sur la longueur du manchon et une déformation lui donnant une forme cylindrique aux diamètres du manchon, ce rail est adapté à un tel accrochage dans un manchon 32 de diamètre intérieur égal à celui de la gaine. La section déformée du rail 20, sur la longueur du manchon est représentée sur la figure 8.

Le manchon 32 est maintenu axialement dans l'embout 4 par appui contre l'extrémité 40 du bouchon d'embout 28 et, à son autre extrémité par une bague 42 enfilée dans l'embout.

Le manchon 32 est ainsi libre de tourner à l'intérieur de l'embout 4, avec le rail 20 qui y est accroché

Comme on le voit, l'accrochage du rail 20 dans le manchon 32 est un accrochage positif, sans jeu longitudinal.

Grâce au système d'accrochage laissant libre le volume nécessaire au-dessus et en dessous de la lame centrale 20 et grâce au fait que le diamètre intérieur du manchon 32 est identique à celui de la gaine, la course des billes 18-18' et de leurs cages 24-24' peut continuer à l'intérieur du manchon d'accrochage, ce qui n'était pas le cas avec les systèmes connus d'accrochage.

Enfin, le déplacement des billes et des cages peut continuer dans l'alésage 44 de la partie filetée 26 de l'embout 4, cet alésage pouvant être choisi égal au diamètre intérieur de la gaine flexible.

Dans le mouvement inverse, la tige coulissante 12 de la commande peut pénétrer à l'intérieur du manchon d'accrochage du rail, qui constituera sa limite de course.

Ce dispositif réduit la longueur des embouts d'extrémité à sa valeur minimale possible.

La possibilité pour les cages à billes de traverser le manchon d'accrochage des rails et de pénétrer à l'intérieur de l'alésage de la tige coulissante, a pour conséquences:

1) dans le cas de la transmission d'un effort en traction sur la tige coulissante, le rail en compression n'est jamais soumis aux fatigues de flambage, puisqu'il est constamment en toute position soutenu par la présence de la cage à billes.

2) D'autre part, dans le cas de la compression, la lame centrale ne peut être démunie du guidage des billes que sur une demi-course, alors qu'elle est suffisamment guidée dans l'alésage de l'embout d'extrémité.

**Revendications**

1. Dispositif flexible tubulaire de transmission d'efforts longitudinaux qui comprend: une gaine tubulaire flexible à section circulaire; une lame centrale plate souple disposée à l'intérieur de la gaine; une première rangée de billes (18) roulant dans un premier chemin de roulement (16) creusé sur une première face de la lame centrale; une deuxième rangée de billes (18') roulant dans un deuxième chemin de roulement (16') creusé sur la deuxième face, opposée à la première, de la lame centrale; ainsi qu'une première et une deuxième cages à billes (24-24') retenant ces billes (18-18'); ledit dispositif étant caractérisé en ce qu'il comprend un rail métallique unique (20) présentant une gorge (23) de roulement pour les billes (18) de la première seulement des rangées de billes, ledit rail (20) étant appliqué contre la surface interne (22) de la gaine (2); en ce que les billes (18') de la deuxième rangée de billes roulent directement sur la surface interne (22) de ladite gaine (2); et en ce que la gaine (2) présente une surface interne lisse propre à servir de chemin de roulement aux dites billes (18').

2. Dispositif suivant la revendication 1 caractérisé en ce que les billes (18') de la deuxième rangée de billes ont un diamètre légèrement plus grand que les billes (18) de la première rangée maintenant la lame centrale dans l'axe de la gaine.

3. Dispositif suivant l'une des revendications 1 ou 2 caractérisé en ce que le rail unique (20) a un profil aplati autorisant sa flexibilité dans un même plan que la lame centrale (8).

4. Dispositif suivant l'une des revendications 1 à 3 qui comprend, à chaque extrémité de la gaine flexible un embout tubulaire (4-4') et un organe d'accrochage du rail monté rotatif à l'intérieur dudit embout et calé axialement dans ledit embout, ledit dispositif étant caractérisé en ce que: l'organe d'accrochage du rail est constitué par un manchon tubulaire (32) fendu longitudinalement; les bords de la fente dudit manchon présentent une pluralité de crans (34); et en ce que les bords de l'extrémité du rail (20) présentent des dents (36) adaptées à s'accrocher dans les crans (34).

5. Dispositif suivant la revendication 4, caractérisé en ce que le manchon d'accrochage (32) a un diamètre intérieur sensiblement égal au diamètre intérieur de la gaine 2, grâce à quoi les billes (18-18') et les cages (24-24') peuvent pénétrer à travers l'embout (4), à l'intérieur du manchon (32).

6. Dispositif suivant la revendication 5 caractérisé en ce que l'extrémité de l'embout (4) opposé à la gaine (2) est percée d'un alésage (44) de diamètre sensiblement égal à celui de la gaine (2), grâce à quoi les billes (18-18') et les cages (24-24') peuvent pénétrer jusque dans ladite extrémité de l'embout (4), de telle sorte que la longueur des embouts d'extrémité est réduite à la valeur minimale qui peut être réalisée dans ce type de transmission.

7. Dispositif suivant l'une des revendications 5 ou 6, caractérisé en ce que le profil du rail 20, dans sa zone d'accrochage sur le manchon 32, est légèrement aplati par rapport au profil du reste du rail (20) dans la gaine.

**Claims**

1. Flexible-tube device for transmitting longitudinal forces which comprises a flexible tubular sheath having a circular cross-section; a flat and flexible core strip placed within the sheath; a first row of balls (18) adapted to roll in a first ball-race (16) cut in a first face of the core strip; a second row of balls (18') adapted to roll in a second ball-race (16') cut in the second core-strip face opposite to the first; as well as a first and a second cage strips (24-24') for retaining the balls (18-18'), said device being characterized in that: it comprises a single metallic rail (20) having a ball-race groove (23) for the balls (18) only of the first row of balls, said rail (20) being applied against the internal surface (22) of the tubular sheath (2); the balls (18') of the second row of balls roll directly on the internal surface (22) of said tubular sheath (2); and said tubular sheath (2) has a smooth internal surface which serves as a ball-race for said balls (18').

2. A device according to claim 1, characterized in that the balls (18') of the second row of balls have a slightly larger diameter than the balls (18) of the first row for maintaining the core strip in the axis of the tubular sheath.

3. A device according to claim 1 or 2, characterized in that the single rail (20) has a flattened profile which permits flexibility of said rail in a same plane as the core strip (8).

4. A device according to one of claims 1 to 3 and comprising at each end of the flexible sheath a tubular end-collar (4-4') and a rail-retaining member rotatably mounted within said end-collar and keyed axially within said end-collar, said device being characterized in that the rail-retaining member is constituted by a tubular sleeve (32) split in the longitudinal direction; a plurality of recesses (34) is formed in the edges of said sleeve; and the edges of the end portion of the rail (20) are provided with teeth (36) adapted to engage in said recesses (34).

5. A device according to claim 4, characterized in that the internal diameter of the retaining sleeve (32) is substantially equal to the internal diameter of the tubular sheath (2), so that the balls (18-18') and cage strips (24-24') can consequently penetrate through the end-collar (4) into the interior of said sleeve (32).

6. A device according to claim 5, characterized in that the end-collar (4) is provided at the end remote from the tubular sheath (2) with a bore (44) substantially equal in diameter to said sheath (2), whereby the balls (18-18') and the case strips (24-24') are consequently capable of penetrating up to said end portion of the end-collar (4), thus reducing the length of the end-collars to the minimum value whoch can be achieved in this type of transmission device.

7. A device according to claim 5 or 6, characterized in that the profile of the rail (20) in its zone of engagement with the sleeve (32) is slightly flattened with respect to the profile of the reminder of the rail (20) within the tubular sheath.

**Patentansprüche**

1. Flexible, rohrförmige Vorrichtung zur Übertragung von Längskräften bestehend aus: einer flexiblen Rohrhülse mit kreisförmigem Querschnitt, einem im Inneren der Hülse angeordneten, biegsamen mittleren Flachband, einer ersten Kugelreihe (18), die in einer ersten Kugelbahn (16) in einer ersten Fläche des mittleren Flachbandes läuft; mit einer zweiten Kugelreihe (18'), die in einer zweiten Kugelbahn (16') in der zweiten, der ersten gegenüberliegenden Seite des mittleren Flachbandes läuft, und mit einem ersten und einem zweiten Kugelkäfig (24, 24'), die die Kugeln (18, 18') aufnehmen, gekennzeichnet dadurch, daß die Vorrichtung nur eine einzige Metallschiene (20) enthält, die eine Kehle (23) als Laufbahn für die Kugeln (18) nur der ersten Kugelreihe enthält, wobei diese Schiene (20) an der Innenoberfläche (22) der Hülse (2) anliegt, daß die Kugeln (18') der zweiten Kugelreihe direkt auf der Innenoberfläche (22) der Hülse (2) laufen und daß die Hülse (2) eine glatte Innenoberfläche besitzt, die als Kugelbahn für die Kugeln (18') dienen kann.

2. Vorrichtung gemäß Patentanspruch 1, dadurch gekennzeichnet, daß die Kugeln (18') der zweiten Kugelreihe einen etwas größeren Durchmesser als die Kugeln (18) der ersten Kugelreihe besitzen, so daß das mittlere Flachband in der Mittelachse der Hülse gehalten wird.

3. Vorrichtung gemäß einem der Patentansprüche 1 oder 2, dadurch gekennzeichnet, daß die einzige Schiene (20) ein abgeflachtes Profil besitzt, durch das sie in der gleichen Ebene wie das mittlere Flachband (8) flexibel ist.

4. Vorrichtung gemäß einem der Patentansprüche 1 bis 3, mit an jedem Ende der flexiblen Hülse einem rohrförmigen Stutzen (4, 4') und einem im Inneren dieses Stutzens angebrachten und gegen axiale Verschiebung in diesem Stutzen gesicherten drehbaren Anschlagelement für die Schiene, dadurch gekennzeichnet, daß das Anschlagelement der Schiene aus einer in Längsrichtung geteilten Rohrmuffe (32) besteht, daß die Ränder der Teilung der Muffe eine Vielzahl von Zähnen (34) besitzen, und daß die Ränder des Endes der Schiene (20) Zähne (36) besitzen, die in die Zähne (34) passen.

5. Vorrichtung gemäß Patentanspruch 4, dadurch gekennzeichnet, daß die Anschlagmuffe (32) einen Innendurchmesser besitzt, der im wesentlichen gleich dem Innendurchmesser der Hülse (2) ist, so daß die Kugeln (18, 18') und die Käfige (24, 24') durch den Stutzen (4) in das Innere der Muffe (32) eingeführt werden können.

6. Vorrichtung gemäß Patentanspruch 5, dadurch gekennzeichnet, daß das der Hülse (2) gegenüberliegende Ende des Stutzens (4) eine Bohrung (44) mit einem Durchmesser besitzt, der im wesentlichen gleich dem der Hülse (2) ist, so daß die Kugeln (18, 18') und die Käfige (24, 24') bis in das Ende des Stutzens (4) eintreten können und die Endstutzen nur noch die Mindestlänge besitzen, die mit einer derartigen Übertragungsvorrichtung erreicht werden kann.

7. Vorrichtung gemäß einem der Patentansprüche 5 oder 6, dadurch gekennzeichnet, daß das Profil der Schiene (20) in deren Anschlagzone auf der Muffe (32) gegenüber dem Profil der übrigen Schiene (20) in der Hülse (2) leicht abgeflacht ist.

FIG_1

FIG_2

FIG_6

FIG_7

FIG_8

FIG_3

FIG_4

FIG_5